# EUROPÄISCHE PATENTANMELDUNG

(11) **EP 2 859 784 A1**
(43) Veröffentlichungstag der Anmeldung: **15.04.2015**
(21) Anmeldenummer: 14187411.5
(22) Anmeldetag: 02.10.2014
(51) Int. Cl.: A01B 71/06

(54) **Steueranordnung zur Einstellung von zwei über eine Kardanwelle verbundenen Antriebswellen**

(30) Priorität: 08.10.2013 IT BZ20130049
(71) Anmelder: Seppi M. spa-AG, 39052 Caldaro (IT)
(72) Erfinder: Seppi, Lorenz, 39052 Caldaro (IT)
(74) Vertreter: Ausserer, Anton

(57) **Zusammenfassung**

Beschrieben wird eine Steueranordnung zur Einstellung von zwei über eine Kardanwelle verbundenen Antriebswellen, wobei die erste Antriebswelle von einer Maschine (100) über einen Kraftausgang (3) mit einer Kardanwelle (8) verbunden ist, wobei die Kardanwelle mit einer zweiten Antriebswelle verbunden ist, die einen Abtrieb (13) eines Getriebegehäuses (9) unter Winkelumlenkung eines Zerkleinerers/ einer Fräse ist, wobei das Getriebegehäuse (9) unter Winkelumlenkung mindestens ein Arbeitswerkzeug betätigt.

Gemäß der Erfindung ist das Getriebegehäuse (9) unter Winkelablenkung mit dem Rahmen (2) des Zerkleinerers/der Fräse über mindestens zwei Arme (41, 42) verbunden ist, um dessen Umdrehung um eine Achse als auch eine Querverschiebung zu erlauben, die durch einen Neigungs- und Schwenksensor gesteuert wird.

## Beschreibung

Die vorliegende Erfindung bezieht sich auf eine Steueranordnung zur Einstellung von zwei über eine Kardanwelle verbundenen Antriebswellen.

Aus dem stand der Technik ist bekannt, dass zur gleichförmigen Bewegungsübertragung über eine Kardanwelle es erforderlich ist, die Eingangs- und Ausgangswinkel der Bewegung möglichst identisch zu halten. Die durch ein Kreuzgelenk verursachten Ungleichmäßigkeiten heben sich somit gegenseitig auf. Beim jetzigen Stand der Technik bestehen Mechanismen, die fähig sind, die Antriebswelle und die Abtriebswelle in einer derartigen Ausgestaltung zu halten, wodurch die Eingangs- und Ausgangswinkel während der Verwendung solcher Maschinen gleich bleiben: solche Mechanismen sind jedoch kompliziert in ihrer Ausführung.

Aus der Veröffentlichung IT 1 379 111 ist ein Ausgleichssystem bei der Verwendung der Kraftübertragung zwischen einem, eine erste "Antriebswelle" genannte Achse, umfassenden Traktor und einer Arbeitsmaschine bekannt, die eine zweite "Abtriebswelle" genannte Achse umfasst, die mit einem Getriebegehäuse verbunden ist, das an der Arbeitsmaschine gegenüber einer im wesentlichen horizontalen und der zur Abtriebswelle senkrechten Achse drehbar befestigt ist, wobei die erste und die zweite Achse zusammenlaufen und durch eine Kardanwelle miteinander verbunden sind und mit der selben jeweils einen Alphawinkel und einen Betawinkel auf einer im wesentlichen vertikalen Ebene bilden, wobei dieses System umfasst: - ein erstes Paar von in einer im wesentlichen vertikalen Ebene angeordneten Haltern, von denen ein erster Halter am Traktor festliegt und eine Anlenkstelle aufweist, wobei ein zweiter Halter am Getriebegehäuse festliegt und eine Anlenkstelle aufweist, wobei der erste und der zweite Halter sich jeweils in einer gegenüber der Kardanwelle versetzten Stellung befinden; ein zweites Paar von in einer im wesentlichen vertikalen zur genannten zweiten vertikalen Ebene abgewandten dritten Ebene angeordneten Haltern, von denen ein dritter Halter am Traktor festlegt und eine Anlenkstelle aufweist, wobei ein vierter Halter am Getriebegehäuse festliegt und eine Anlenkstelle aufweist, wobei der dritte und vierte Halter sich in einer gegenüber der Kardanwelle versetzten und dem ersten und zweiten Halter abgewandten Stellung befinden, deren eigene Länge geändert werden kann und zueinander gebunden sind um die entsprechenden Längen im wesentlichen gleich zu halten, wobei die Anordnung der Art ist, dass die genannten Alpha- und Betawinkel in jeder Arbeitsstellung gleich sind.

Auch wenn dieses System erhebliche Vorteile mit sich bringt ist es in seiner Ausführung und Einstellung noch zu komplex.

Die Aufgabe der vorliegenden Erfindung liegt in der Verbesserung des Einstelltsystems des Eingangswinkels der Abtriebbewegung mit höchster Flexibilität in der Übertragung.

Diese Aufgabe wird durch eine Steueranordnung zur gegenseitigen Einstellung von zwei über eine Kardanwelle verbundenen Antriebswellen gelöst, wobei die erste Welle von einer Maschine angetrieben wird, deren Kraftausgang über ein Kreuzgelenk mit einer Kardanwelle verbunden ist, wobei die Kardanwelle mit einer zweiten Welle verbunden ist, die durch einen Abtrieb eines Getriebegehäuses unter Winkelumlenkung eines Mulchgerätes dargestellt ist, wobei das Getriebegehäuse unter Winkelumlenkung mindestens ein Arbeitswerkzeug betätigt und wobei das Getriebegehäuse unter Winkelablenkung mit dem Rahmen des Mulchgerätes über mindestens zwei Arme verbunden ist, um dessen Umdrehung um eine Achse als auch eine Querverschiebung der Art derart zu erlauben, dass die zweite Welle immer der Art angeordnet ist, dass die "idealen" Achsen der beiden Wellen ein gleichschenkliges Dreieck bilden.

In einer bevorzugten Ausführungsform sind die Arme zu einander unter einem Winkel von 10° bis 170° angeordnet. Auf diese Art und Weise ist die Achse der zweiten Welle in der Anfangsstellung im wesentlichen parallel zur Achse der ersten Welle.

Diese Anordnung ist insbesondere vorteilhaft für Maschinen, die sowohl die Aufgabe der Zerkleinerung als auch des Mulchens erfüllen, da die Winkel zur Ausführung der Arbeit verschieden sind.

Mit der Anordnung gemäß der Erfindung ist es möglich den Winkel der Werkzeuge über den Winkelgetriebegehäuse leicht einzustellen, dass sowohl verschwenkt als auch verstellt werden kann. Zur Einstellung der Position kann eine Deichsel mit veränderbaren Länge vorgesehen sein.

Mit dem Zahnrad können auch mehrere werkzeugtragende Trommeln in Reihe verbunden sein.

Weitere Merkmale gehen nicht begrenzend aus der Zeichnung und aus dem beschriebenen Ausführungsbeispiel hervor. Es zeigen:
Figur 1 ein Schaubild einer Zugmaschine einem Mulchgerät,

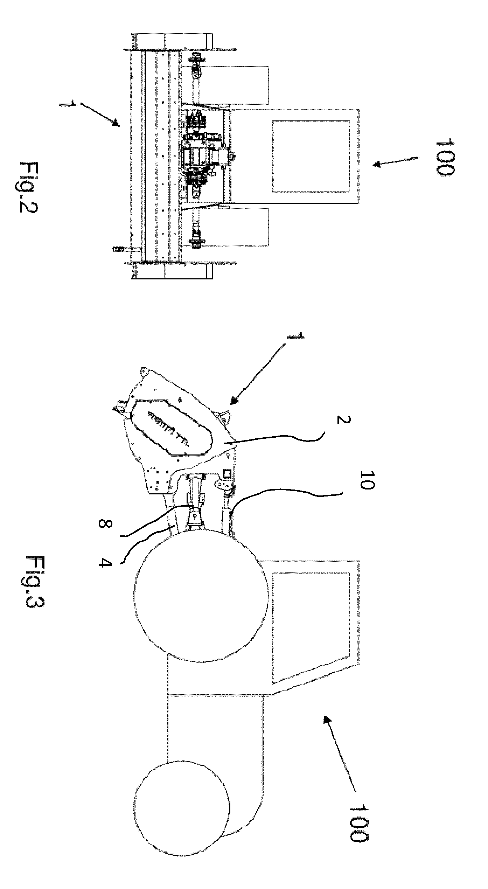

Figur 2 eine Ansicht von hinten einer Zugmaschine mit einem Mulchgerät,
Figur 3 eine Seitenansicht einer Zugmaschine mit einem Mulchgerät,

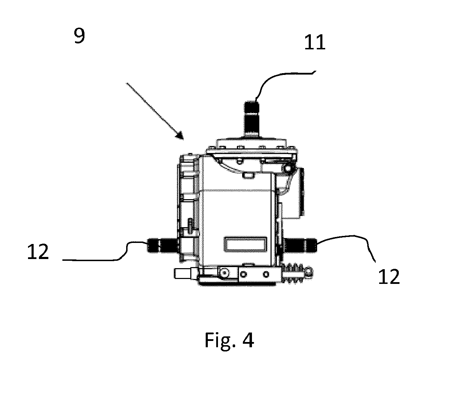

Figur 4 ein Winkelgetriebe,

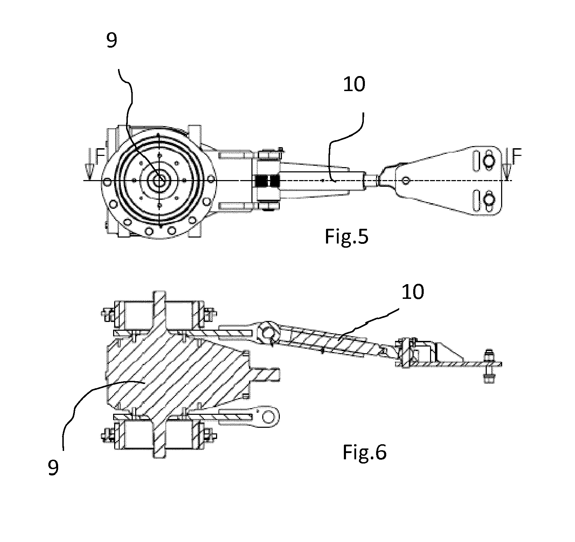

Figur 5 eine Draufsicht der Verbindung zwischen Zugmaschine und Mulchgerät,
Figur 6 einen Schnitt der Figur 5,

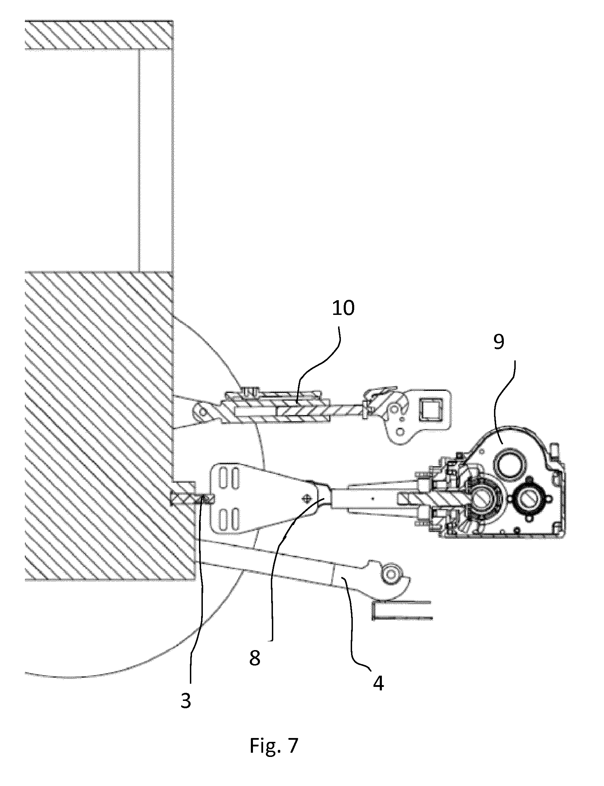

Figur 7 einen Schnitt der Verbindung Maschine und Mulchgerät, und

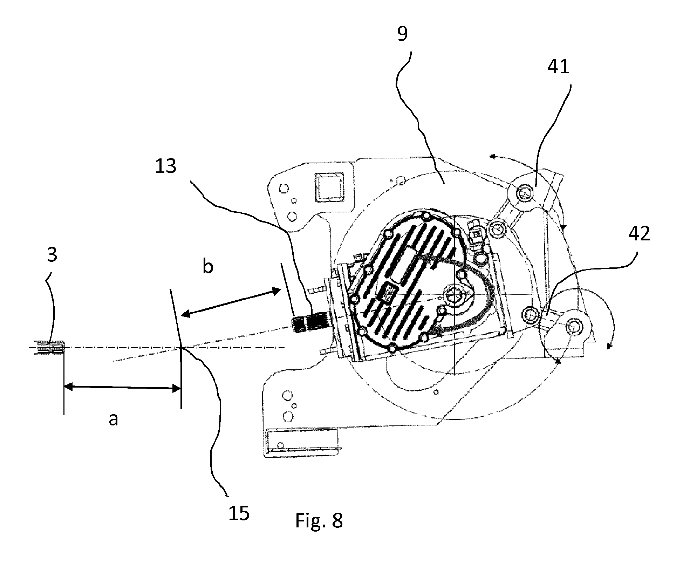

Figur 8 eine Winkelgetriebe, das gemäß der Erfindung in einem Mulchgerät befestigt ist.

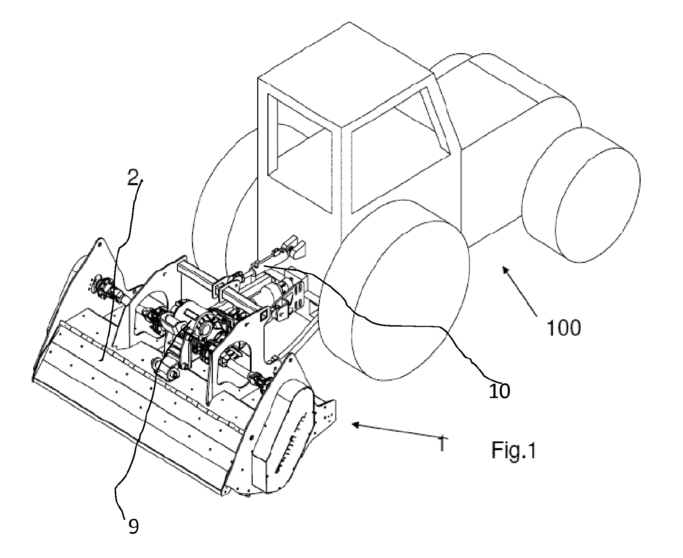

In Figur 1 ist mit der Bezugsziffer 100 eine Maschine, bevorzugter Weise ein Traktor angegeben. Mit diesem Traktor 100 ist ein Mulchgerät 1 verbunden. Diese Verbindung über Balken 4 dient dazu, das Mulchgerät zu ziehen. Die Maschine 100 überträgt überdies ein Antriebsmoment über eine Welle 5. Diese Welle 5 ist über eine Kardanwelle 8 mit einer Antriebswelle 7 verbunden, die ein Winkelgetriebegehäuse 9 antreibt, die am Ausgang mit mindestens einem Werkzeugträger verbunden ist, die zum Beispiel Werkzeuge für das Mulchen trägt.

Die Welle 5 und die Welle 7 müssen unter einem gleichschenkligen Winkel angeordnet sein, um eine optimale Betriebsweise sicherzustellen. Dieses Getriebegehäuse 9 ist mit dem Rahmen des erfindungsgemäßen Mulchgerätes 1 über mindestens zwei Arme 41, 42 verbunden. Diese beiden Arme 41, 42 erlauben, dass der Winkelantrieb um eine Achse verschwenkt werden kann.

Auf diese Art und Weise können die Welle 5 und die Welle 8 der Art gehalten werden, dass sie im wesentlichen ein gleichschenkliges Dreieck bilden.

Diese Einstellung ist überdies besonders vorteilhaft für kombinierte Maschinen Zerkleinerer/Mulchgeräte, da der Winkel der Werkzeuge zwischen des Verfahrens der Zerkleinerung und des Fräsens gewechselt werden muss.

Die Einstellung des Winkelgetriebegehäuses kann auf bevorzugte Art und Weise mittels einer Deichsel 10 erfolgen. Auf diese Weise kann sowohl der Abstand vom Rahmen des Zerkleinerers/Fräsers als auch die Richtung eingestellt werden.

Diese Deichsel 10 kann teleskopisch ausgebildet sein um deren einfachere Einstellung zu erlauben.

Die erfindungsgemäße Anordnung legt in einer Ausführungsform fest, dass das Verhältnis zwischen der Länge des Kraftausganges 3 und der Drehmitte 15 zwischen dem Kraftausgang 13 und dem Kraftabtrieb 13 und die Länge der Drehmitte

15 zwischen dem Kraftausgang 3 und dem Kraftabtrieb 13 konstant bleibt.

Legende der Bezugsziffern
1.Zerkleinerer/Fräser
2.Rahmen
3.Kraftausgang
4.Balken
5.Welle
7. Antriebswelle
8. Kardanwelle
9. Winkelgetriebegehäuse
10. Deichsel
11. Eingang Getriebegehäuse
12. Ausgänge Getriebegehäuse
13. Kraftabtrieb
15. Drehstelle
41,42. Arme
100. Maschine

## Patentansprüche

1. Steueranordnung zur Einstellung von zwei über eine Kardanwelle verbundenen Antriebswellen, wobei die erste Antriebswelle von einer Maschine (100) über einen Kraftausgang (3) mit einer Kardanwelle (8) verbunden ist, wobei die Kardanwelle mit einer zweiten Antriebswelle verbunden ist, die einen Abtrieb (13) eines Getriebegehäuses (9) unter Winkelumlenkung eines Zerkleinerers/Fräsers ist, wobei das Getriebegehäuse (9) unter Winkelumlenkung mindestens ein Arbeitswerkzeug betätigt, **dadurch gekennzeichnet, dass** das Getriebegehäuse (9) unter Winkelablenkung mit dem Rahmen (2) des Zerkleinerers/Fräsers über mindestens zwei Arme (41, 42) verbunden ist, um dessen Umdrehung um eine Achse als auch eine Querverschiebung zu erlauben, die durch einen Neigungs- und Schwenksensor gesteuert wird.

2. Anordnung nach Anspruch 1, **dadurch gekennzeichnet, dass** das Verhältnis der Länge zwischen dem Kraftausgang (3) und der Drehstelle (15) zur Länge zwischen der Drehmitte (15) und dem Kraftabtrieb (13) konstant bleibt.

3. Anordnung nach Anspruch 1, **dadurch gekennzeichnet, dass** die Arme zu einander unter einem Winkel von 10° bis 170° angeordnet sind.

4. Anordnung nach Anspruch 1 oder 2, **dadurch gekennzeichnet, dass** das Getriebegehäuse (9) durch eine Teleskopdeichsel (10) eingestellt wird.
